Europäisches Patentamt

European Patent Office

Office européen des brevets

(19)

(11) Numéro de publication : **0 346 198 B1**

(12)

# FASCICULE DE BREVET EUROPEEN

(45) Date de publication du fascicule du brevet :
**19.08.92 Bulletin 92/34**

(51) Int. Cl.⁵ : **C03B 23/025,** C03B 27/04, C03B 35/16

(21) Numéro de dépôt : **89401535.3**

(22) Date de dépôt : **05.06.89**

(54) **Amélioration des performances des installations de bombage et de trempe de plaques de verre à lit de conformation courbe dans la direction de défilement du verre.**

(30) Priorité : **07.06.88 FR 8807533**

(43) Date de publication de la demande :
**13.12.89 Bulletin 89/50**

(45) Mention de la délivrance du brevet :
**19.08.92 Bulletin 92/34**

(84) Etats contractants désignés :
**AT BE CH DE ES FR GB IT LI LU NL SE**

(56) Documents cités :
**EP-A- 0 263 030**
**FR-A- 2 549 465**
**US-A- 2 308 062**
**US-A- 2 560 305**

(73) Titulaire : **SAINT-GOBAIN VITRAGE INTERNATIONAL**
**18, avenue d'Alsace**
**F-92400 Courbevoie (FR)**

(72) Inventeur : **Letemps, Bernard**
**5, avenue du Gros Buisson**
**F-60150 Thourotte (FR)**
Inventeur : **Leclercs, Jacques**
**34, rue de Cambrai**
**F-80240 Roisel (FR)**
Inventeur : **Dereims, Philippe**
**19, rue des Domeliers**
**F-60200 Compiègne (FR)**

(74) Mandataire : **Menes, Catherine et al**
**SAINT-GOBAIN RECHERCHE 39, Quai Lucien Lefranc**
**F-93300 Aubervilliers (FR)**

## Description

La présente invention concerne le bombage de plaques de verre et éventuellement également leur trempe et elle se rapporte plus particulièrement à une installation de bombage et éventuellement de trempe dans laquelle lesdites plaques de verre sont bombées en étant transportées sur un convoyeur dont les organes de support des plaques de verre sont disposés le long d'une trajectoire courbe.

Cette technique de bombage éventuellement prolongée par une trempe thermique est plus particulièrement décrite dans les demandes de brevets français 2 442 219 et 2 549 465 et dans la demande de brevet européen 263 030. Dans ces documents, on décrit des convoyeurs à rouleaux rectilignes dont les paliers sont disposés le long d'une trajectoire courbe, descendante ou de préférence montante, aptes à conférer aux plaques de verre portées à leur température de bombage et donc déformables sous l'effet de la gravité, une courbure simple c'est-à-dire suivant une seule direction, ou encore cylindrique, lorsqu'elles défilent sur ces convoyeurs. On décrit également des convoyeurs à rouleaux ou tiges cintrées, dont les paliers sont, comme précédemment, disposés le long d'une trajectoire courbe, constituant ainsi pour les plaques de verre chauffées à température de bombage qui y circulent, un lit de conformation à double courbure, à la fois courbure dans la direction de circulation des plaques de verre du fait de la disposition des rouleaux ou tiges cintrées suivant la trajectoire courbe, et courbure transversale dans la direction perpendiculaire à la direction de circulation, du fait de la forme cintrée des rouleaux ou tiges.

Le document de brevet FR-A- 2 549 465 déjà cité, propose aussi une récupération des plaques de verre à l'extrémité haute du dispositif de bombage et de trempe à profil courbe dans la direction de progression des plaques de verre. Cette récupération est effectuée par un système à basculement dans lequel s'engage chaque plaque de verre à la fin de l'opération de bombage et de trempe, ce système basculant sous l'effet du porte-à-faux créé par le poids de la plaque de verre et déposant ladite plaque sur un transporteur qui n'a plus l'orientation inclinée fortement redressée de la fin du dispositif de bombage et de trempe, mais une orientation différente, sensiblement horizontale si désiré. Après avoir basculé chaque plaque de verre sur le transporteur d'évacuation, le système basculant libéré du porte-à-faux créé par la plaque de verre, revient par basculement en sens inverse, à sa position initiale en attente de la plaque de verre suivante.

Ce système basculant donne satisfaction, cependant, le temps de basculement en sens inverse pour revenir en position de réception d'une nouvelle plaque de verre est gênant essentiellement parce qu'il limite la cadence de cette technique de bombage-trempe. En effet, selon cette technique, les plaques de verre pourraient se succéder à cadence élevée, pratiquement sans intervalle entre elles, s'il n'y avait pas la nécessité d'attendre le retour en position de réception du système basculant.

La présente invention vise donc à supprimer cette limitation à la cadence introduite par le système à basculement pour la récupération des plaques de verre en sortie de l'installation bombage-trempe de façon à pouvoir profiter sans restriction des aptitudes de cette technique de bombage-trempe de plaques de verre sur un lit de conformation à profil courbe selon la direction de progression des plaques de verre.

En outre, ce système à basculement pour la récupération des plaques de verre est, selon FR-A- 2 549 465 déjà cité, disposé après la zone de trempe, ce qui implique donc un temps de traversée dudit système à basculement, uniquement consacré au basculement, pendant lequel l'état des plaques de verre, c'est-à-dire le bombage, la trempe, n'évolue pas, et venant s'ajouter à la durée du traitement de bombage et de trempe.

Avantageusement, toujours essentiellement en vue d'améliorer les performances de l'installation de bombage et de trempe de plaques de verre comprenant un lit de conformation à profil courbe selon la direction de progression des plaques de verre, l'invention vise à comprimer, et même à supprimer, ce temps mort de traversée du système à basculement uniquement réservé à la récupération des plaques de verre et pendant lequel leur état n'est pas modifié.

L'invention propose pour cela un procédé de récupération des plaques de verre comme il est indiqué dans la revendication 1.

L'invention propose également des dispositifs de basculement permettant d'améliorer le rendement et, en particulier, la cadence de défilement des plaques de verre dans une installation de bombage et de trempe comportant un lit de conformation à profil courbe selon la direction de progression des plaques de verre.

Elle propose pour cela un dispositif de récupération des plaques de verre comme il est indiqué dans la revendication 2.

Dans une forme de réalisation, les moyens pour entrainer le barillet en rotation comprennent une came solidaire du barillet et un galet moteur entrainant périodiquement la came.

Dans une réalisation avantageuse, le système de basculement est, en outre, équipé de moyens de soufflage d'un gaz destinés à souffler sur les plaques de verre en vue de les tremper, alors qu'elles sont prises en charge par ledit système.

L'invention sera maintenant décrite plus en détail en référence aux figures jointes qui représentent :

    * **figure 1** : le schéma général d'une installation de bombage et de trempe pour laquelle des systèmes de basculement selon l'invention sont prévus ;

* **Figure 2** : un schéma illustrant les différents organes supports pouvant équiper l'installation de bombage-trempe et le basculeur selon l'invention :

    . 2a : des rouleaux rectilignes,
    . 2c : des tiges cintrées,
    . 2b : des rouleaux type "diabolo/fuseau",
    . 2d : des rouleaux "contrefléchis" ;

* **figure 3** : un système de basculement selon l'invention représenté dans les phases a, b et c de son fonctionnement :

    . 3a : au moment de la réception d'une plaque de verre,
    . 3b : pendant le basculement,
    . 3c : au cours de la rotation en vue du repositionnement pour une nouvelle réception ;

* **figure 4** : un système de basculement selon l'invention à deux positions de réception, équipé de moyens de soufflage.

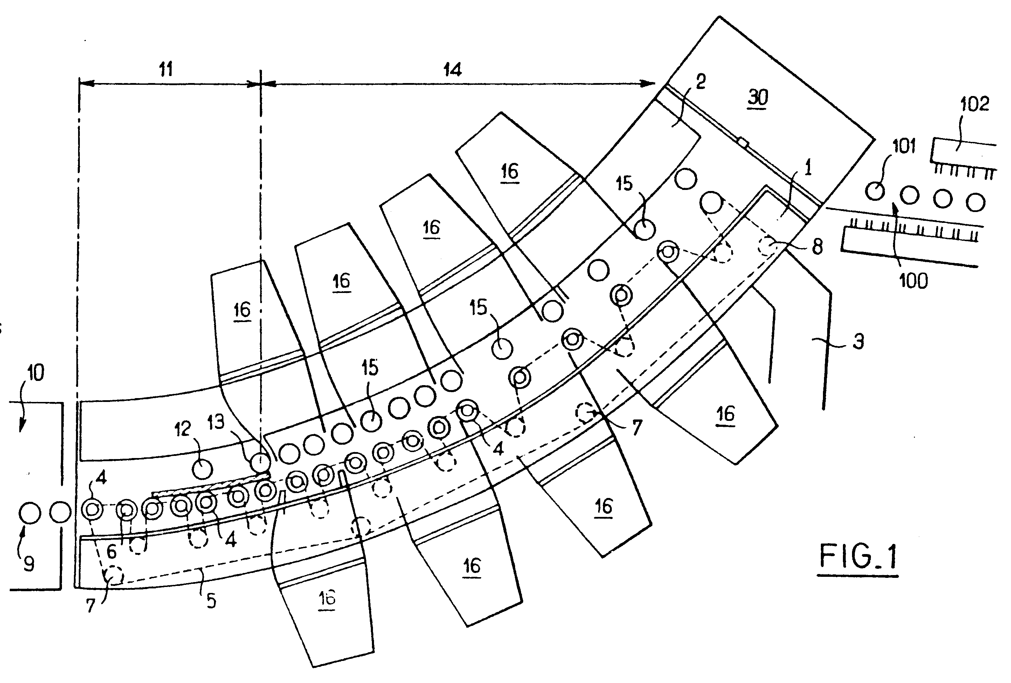

Une vue schématique de la figure 1 montre une installation de bombage et de trempe de plaques de verre pour laquelle des systèmes de basculement selon l'invention sont prévus.

Elle possède deux éléments de châssis 1 et 2, un élément inférieur 1 et un élément supérieur 2, courbés dans la direction de leur longueur et portés par un bâti 3.

L'élément inférieur 1 est équipé d'organes 4 supportant le verre tels des rouleaux droits disposés parallèlement les uns aux autres dans la largeur dudit élément, mis en rotation sur eux-mêmes par exemple par l'intermédiaire d'une chaine 5 agissant sur des pignons 6 disposés en extrémité des rouleaux, maintenue tendue à l'aide de pignons tendeurs et de rappel 7, entraînée à partir d'un arbre moteur 8. Les organes 4, en particulier les rouleaux droits disposés les uns à la suite des autres, déterminent un lit de conformation pour les plaques de verre, à profil courbe, faisant suite à un convoyeur 9 d'amenée des plaques de verre qui traverse un four de réchauffage du verre. De préférence, le lit de conformation ainsi constitué est tangent au convoyeur 9 de façon à proposer aux plaques de verre un chemin continu, régulier, sans à-coup, cassure ou sursaut.

L'élément supérieur 2 est équipé, au moins dans certaines parties, de moyens de maintien supérieurs des plaques de verre tels que 15. Avantageusement, comme représenté sur la figure 1, de tels moyens 15 n'existent pas dans une première zone 11 où s'effectue le bombage ; peuvent éventuellement exister dans la zone 11 des moyens tels que 12 très espacés par rapport aux organes inférieurs 4 n'intervenant qu'à titre de sécurité, de façon que des plaques de verre défilant sur les organes inférieurs 4, dans la mesure où elles s'affaissent normalement sur le lit de conformation et en épousent la forme, ne les touchent pas. Puis en limite de la zone de bombage 11, juste avant une seconde zone la zone de trempe 14, le châssis 2 est équipé d'un moyens 13 d'aide à l'avancement des plaques de verre faisant également barrière à la pénétration de l'air de trempe dans la zone de bombage. Cet organe est, par exemple, dans la mesure où les organes inférieurs 4 sont des rouleaux rectilignes, un rouleau du même type, disposé pour être en contact avec la face supérieure des plaques de verre, en regard du rouleau inférieur 4 à l'extrémité aval de la zone de bombage 11, entrainé à la même vitesse que les rouleaux inférieurs 4.

Dans la zone de trempe 14, qui fait immédiatement suite à la zone de bombage 11, sont disposés des organes supports 4, des moyens de maintien supérieurs 15, en contact avec le verre et en appui sur lui, ces organes 4 et ces moyens 15 étant de même nature que les organes 4 de la zone 11, à savoir des rouleaux rectilignes si des rouleaux rectilignes constituaient les organes 4 de la zone 11. Dans cette zone 14, sont également disposées des buses de soufflage 16 destinées à souffler un gaz de refroidissement, en général de l'air, sur le verre en vue de le tremper. Ces buses 16 sont disposées de façon à souffler le gaz de refroidissement à la fois sur la face inférieure et la face supérieure du verre.

L'évacuation des plaques de verre à l'extrémité de la partie d'installation décrite précédemment est réalisée par un système à bascule 30, objet de la présente invention et détaillé dans ses diverses variantes sur les figures jointes.

Ce système 30 délivre les plaques de verre à un transporteur 100 ayant une orientation différente de celle de l'installation immédiatement en amont du système 30. Plus précisément, immédiatement avant le système 30, les plaques de verre sont dans une position inclinée, parfois fortement inclinée, et de préférence le transporteur 100 a une position horizontale ou sensiblement horizontale.

Dans la mesure où les organes supports 4 des zones de bombage 11 et de trempe 14 sont des rouleaux rectilignes, le transporteur 100 est constitué lui aussi de rouleaux rectilignes 101 ou d'éléments équivalents (galets, coussins gazeux, etc...).

Dans l'installation décrite précédemment, les plaques de verre acquièrent une courbure simple, c'est-à-dire dans une seule direction, la direction de leur défilement du fait de leur affaissement sur le lit de conformation à profil courbe dans la direction longitudinale.

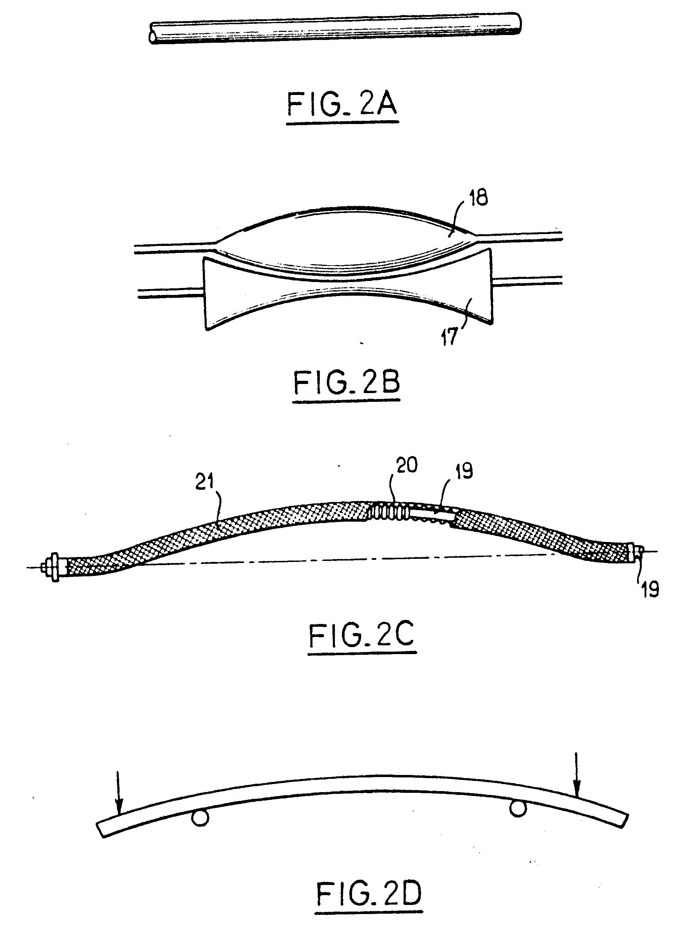

Une installation du même type peut être prévue pour conférer aux plaques de verre, en plus de leur courbure dans la direction de leur défilement, une courbure dans la direction transversale. Dans ce cas les organes supports 4, les moyens de maintien 15, les moyens 12 et 13 sont modifiés en conséquence. Il s'agira par exemple de rouleaux du type "diabolo" 17 ou "fuseau" 18 (figure 2b), c'est-à-dire non cylindrique mais ayant au contraire des formes profilées, organes inférieurs 4 et moyens supérieurs 15, 13 et éventuellement 12, ayant alors des formes complémentaires.

Il pourra s'agir également de tiges ou rouleaux cintrés, ayant (comme montré figure 2c) une âme centrale rigide 19 cintrée, recouverte d'une gaine tubulaire annelée 20 rigide en rotation mais déformable axialement, elle-même recouverte d'une protection 21 en fils de verre ou de silice tressés ou tricotés. Ces tiges ou rouleaux cintrés sont plus précisément décrits dans les documents de brevets français 1 476 785, 92 074, 2 129 919, 2 144 523, 2 189 330.

Il pourra s'agir également de rouleaux cintrés d'un autre type, par exemple des rouleaux rectilignes au repos mais cintrés par l'effet d'une contrainte exercée sur leurs extrémités, ces rouleaux sont généralement dits "contrefléchis" et sont illustrés sur la figure 2d.

Pour que la figure 2 constitue un inventaire des différents organes de support ou de maintien du verre utilisables, un rouleau rectiligne a été ajouté en vue 2a.

Le transporteur 100 est adapté lui aussi au type de courbure des plaques de verre à transporter et ses éléments supportant les plaques de verre seront du même type que ceux installés dans les zones 11 et 14 de bombage et de trempe.

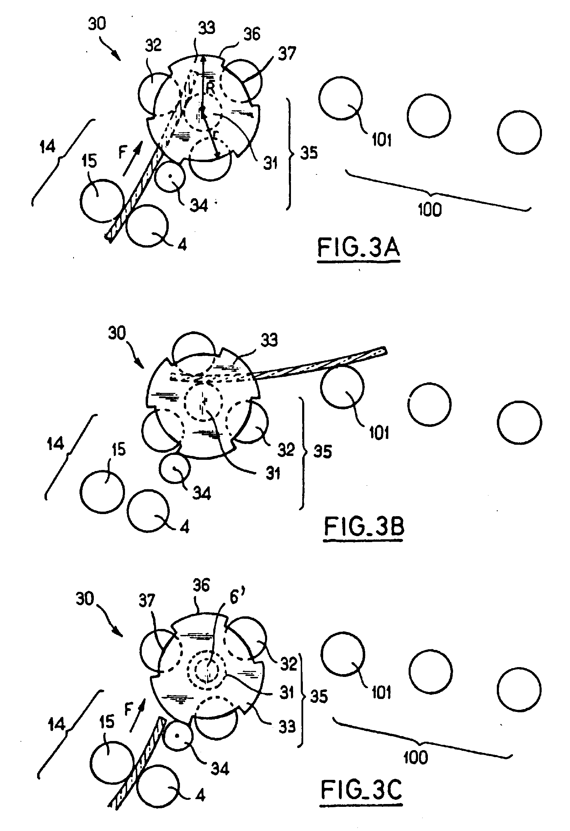

Le système basculeur 30 est, par exemple, du type montré sur les figures 3a, 3b et 3c.

Ces figures 3a, 3b et 3c montrent toutes le dernier couple de moyens de maintien supérieurs 15 et d'organes support 4 immédiatement en amont, c'est-à-dire à l'extrémité de la zone 14 de trempe, et les premiers éléments de support 101 du transporteur 100 horizontal ou sensiblement horizontal.

Comme déjà dit ces moyens 15, organes 4 ou éléments 101 peuvent être, suivant le type de courbure désirée pour les plaques de verre, des rouleaux rectilignes ou des rouleaux cintrés, des rouleaux contrefléchis, des rouleaux profilés.

Pour simplifier la description du système à bascule 30, nous prendrons l'exemple d'une installation de bombage-trempe destinée à produire des plaques de verre n'ayant qu'une courbure simple étant entendu que l'invention n'est pas limitée à cette seule installation, mais qu'elle s'adresse aussi aux installations permettant de produire des plaques de verre à courbure double encore appelée complexe.

Le système basculeur (montré sur les figures 3) globalement référencé 30, est constitué essentiellement d'un organe support central 31 (et dans la description simplifiée que nous faisons d'un rouleau support central 31), d'une pluralité de moyens de maintien associés 32 équivalents (dans notre description simplifiée, des rouleaux de maintien 32), répartis en position équivalente autour du rouleau support central 31, chacun étant espacé de l'organe 31 de façon à permettre l'engagement d'une plaque de verre entre les deux, et il est associé à des moyens pouvant l'entraîner périodiquement en rotation. L'organe support central 31 tourne indépendamment du système basculeur 30, à la même vitesse que les organes supports 4 des zones 11 et 14 précédentes. Avantageusement la chaine 5 qui entraine ces organes des zones 11 et 14 engrène également sur un pignon 6' situé en extrémité de l'organe support central 31.

L'ensemble 31, 32 associé à au moins une came 33 constitue un barillet globalement référencé 35, apte à tourner autour de l'axe du rouleau support 31, indépendamment de ce rouleau 31.

L'entrainement en rotation du barillet 35 peut être obtenu, comme montré sur les figures 3, grâce à la came 33 solidaire de l'organe support 31 et des moyens de maintien associés 32, et grâce également à au moins un galet d'entrainement 34 de la came 33, par exemple mu par la chaine 5 qui entraine les rouleaux supports 4 ou par une chaine supplémentaire entrainée par le même arbre moteur 8 ou par un autre arbre moteur indépendant.

Dans une forme de réalisation simple, la périodicité d'entrainement est obtenue par le fait que la came 33 présente un contour ayant des zones dites "actives" 36 aptes, lorsqu'elles sont en coïncidence avec le galet 34, à être en contact avec lui, ce qui se traduit par un entrainement en rotation du barillet 35 et des zones dites "inactives" 37 qui, même lorsqu'elles sont en regard du galet 34 ne sont pas en contact avec lui, ce qui fait que le barillet 35 à ces instants là n'est pas entraîné. De façon pratique, la came 33 est un disque globalement circulaire disposé en extrémité des rouleaux 31 et 32, perpendiculairement à eux ; les zones actives 36 sont constituées par des portions de circonférence à rayon R et les zones inactives sont constituées par des portions de circonférence à rayon r inférieur à R, ce qui constitue sur le disque de la came 33 des séries de créneaux ou échancrures.

Les parties actives 36 et les parties inactives ou échancrures 37 sont organisées de façon que le barillet 35 soit entraîné en rotation depuis la position qu'il a après avoir basculé une plaque de verre sur le transporteur 100, jusqu'à une nouvelle position dans laquelle le rouleau support central 31 et l'un des rouleaux de maintein 32 qui lui sont associés dans le barillet 35, sont prêts à recevoir une nouvelle plaque de verre à l'extrémité du lit de conformation à profil courbe.

La surface du galet 34 et/ou de la came 33 est en une matière du type caoutchouc qui favorise l'entrainement de la came 33 du fait du simple contact.

Eventuellement, le galet 34 peut être équipé d'un embrayage à limiteur de couple, c'est-à-dire d'un système assurant son immobilité lorsque la résistance à la rotation dépasse une valeur déterminée. Ainsi lorsque le galet 34 est en appui sur un début de partie active, mais que la plaque de verre déjà en appui sur le transporteur d'évacuation 100 n'est pas encore totalement dégagée du couple de rouleaux support 31, de maintien 32, la rotation du barillet 35 est bloquée ; à ce moment l'embrayage à limiteur de couple intervient.

Pour éviter l'emploi d'un embrayage à limiteur de couple, on peut prévoir des rampes inclinées pour passer d'une zone inactive 37 à une zone active 36, permettant l'attaque progressive du galet 34 et son patinage tant que la résistance à la rotation existe.

D'autres moyens pouvant entraîner périodiquement le barillet 35 en rotation sont possibles. Ainsi le galet 34 peut être équipé de son moteur ou, plus généralement, de son moyen d'entrainement, mis en fonctionnement seulement périodiquement ; dans ce cas les découpes de la came en portions actives 36 et inactives 37 sont inutiles. Ainsi encore le barillet peut posséder son propre moteur, mis en fonctionnement périodiquement.

Pour obtenir le meilleur rendement de l'installation et donc pour que le temps d'amenée en position de réception du barillet soit le plus faible possible, il importe que la rotation du barillet 35 pour venir en position de réception soit la rotation de l'angle le plus faible possible. Le cas où aucune rotation supplémentaire est nécessaire est idéal, mais il correspond à la fois à des positions respectives du lit de conformation et du transporteur d'évacuation 100 tout à fait particulières ainsi qu'à une distribution des moyens de maintien 32 autour de l'organe support 31 correspondant à ces positions respectives.

Dans les figures 3, la construction représentée comporte 3 rouleaux de maintien 32 régulièrement répartis à la périphérie du rouleau support central 31 et la came 33 comporte trois parties actives 36 séparées deux à deux par une partie inactive 37.

Les rouleaux de maintien 32 sont montés de façon à présenter vis-à-vis du rouleau support central 31 un écart déterminé, correspondant à l'épaisseur des plaques de verre à traiter et réglable pour s'adapter aux différentes épaisseurs de verre possibles.

Un barillet 35 ne comportant que deux rouleaux de maintien 32 présente déjà un intérêt, mais le nombre possible de rouleaux de maintien peut être plus élevé : 3, 4... Avantageusement, sans que toutefois cela soit obligatoire, les moyens de maintien 32 sont régulièrement répartis autour de l'organe support central 31.

Le système représenté sur les figures 3 fonctionne de la façon décrite ci-après.

Comme montré figure 3a, dans l'attente d'une plaque de verre évoluant dans l'installation de bombage-trempe sur le lit de conformation courbe, d'abord dans la zone de bombage 11, puis dans la zone de trempe 14, le barillet 35 du système basculeur est tel que l'un des espaces séparant le rouleau support central 31 d'un rouleau de maintien 32, est dans le prolongement des espaces correspondants situés en amont dans la zone 14. Pendant cette attente, le barillet 35 est immobile et pour cela le galet moteur 34 n'agit pas sur la came 33 ; il est en regard du début d'une échancrure inactive 37. La plaque de verre s'insère par son bord avant entre le rouleau support 31 et le rouleau de maintien 32 en regard, disposés en position de réception. Entrainée par les rouleaux inférieurs supports 4 de la zone de trempe, par le rouleau support 31 et éventuellement par les rouleaux supérieurs de maintien 15, la plaque de verre progresse suivant la flèche F dans le système basculeur 30, celui-ci restant immobile.

Quand le bord arrière de la plaque de verre est libéré de l'ensemble constitué par le dernier rouleau inférieur 4 de la zone 14 et le dernier rouleau supérieur 15 associé, le barillet 35 est libre de basculer, et c'est ce qu'il fait dès que la partie de la plaque de verre ayant dépassé le rouleau 31 et le rouleau 32 est suffisante pour que son poids fasse tourner le système. Le système tourne jusqu'à ce que la plaque de verre vienne accoster sur le transporteur d'évacuation 100. Pendant cette rotation qui s'effectue sous le seul effet du poids du verre, la came 33 a tourné de toute la partie échancrée inactive 37 en regard du début de laquelle se trouvait le galet 34 avant la rotation, si bien que le début d'une partie active 36 de la came 33 se retrouve en regard du galet d'entrainement 34. Ceci est illustré sur la figure 3b. Tant que la plaque de verre n'est pas totalement dégagée des deux rouleaux de support 31 et de maintien 32, le galet 34 patine sur le début de la partie active 36 ou le limiteur de couple intervient, puis dès que la plaque de verre est libérée, il n'y a plus aucun frein à la rotation du barillet et celui-ci est entraîné par le galet 34 jusqu'à ce que ce galet 34 arrive, après avoir roulé sur tout un secteur actif 36, en début d'un nouveau secteur inactif 37. Cette nouvelle position est illustrée sur la figure 3c.

On constate que l'angle dont a tourné le barillet 35 pour passer de la position illustrée sur la figure 3B à la position de la figure 3C, n'est que de l'ordre d'une cinquantaine de degrés et donc que le temps pour tourner de cet angle est faible et bien inférieur au temps qu'il aurait fallu si le basculeur n'avait été équipé que d'un seul poste de réception.

Il en résulte un gain de temps appréciable, qui autorise de faire suivre les plaques de verre dans l'installation de bombage-trempe, pratiquement sans intervalle.

Avantageusement, dans une installation de bombage-trempe équipée d'un basculeur à plusieurs positions de réception comme décrit précédemment, l'invention propose en outre de souffler du gaz concourant à la trempe pendant le passage des plaques de verre dans le basculeur et avantageusement d'embarquer les moyens de soufflage sur le basculeur.

Les basculeurs qu'on équipe de moyens de soufflage sont les basculeurs décrits précédemment, c'est-à-dire qu'ils possèdent plusieurs positions de réception : 2, 3, 4... Toutefois, étant donné qu'il s'agit là d'aménagements supplémentaires sur un basculeur déjà compliqué par la multiplication des postes de réception, les basculeurs ayant en outre des moyens de soufflage sont de préférence, seulement à deux positions de réception éventuellement trois, mais rarement plus.

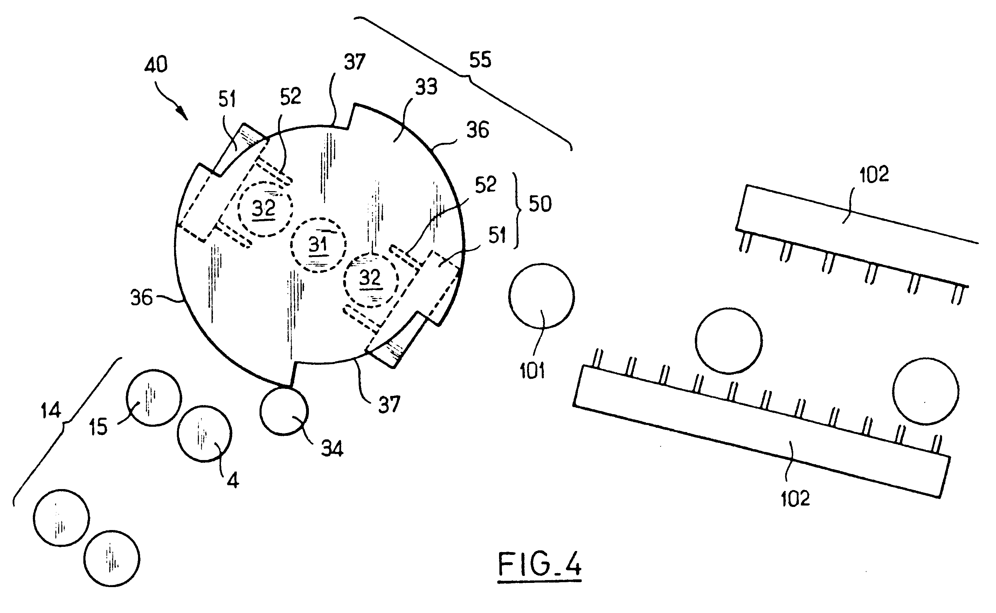

La figure 4 montre un basculeur 40 à deux postes de réception, équipé en outre de moyens de soufflage.

Les éléments envisagés précédemment se retrouvent, à savoir essentiellement un organe support central 31, des moyens de maintien supérieurs 32, une came 33, un galet d'entrainement 34.

Comme déjà dit, les organes support et les moyens de maintein peuvent être cintrés, ou présenter des formes profilées, mais dans le cas le plus simple et le plus fréquent où l'on cherche seulement à donner une courbure simple aux plaques de verre, ces organes ou moyens de maintien 31 et 32 sont des rouleaux rectilignes. Donc, pour la suite de la description de ce mode de réalisation, nous nous bornerons à employer le mot "rouleau", mais nous saurons que l'invention n'est pas limitée à des rouleaux rectilignes et qu'elle englobe aussi tous les supports et moyens de maintien en forme ou cintrés.

En plus des organes précédemment rencontrés, le basculeur 40 possède des moyens de soufflage 50 comprenant essentiellement des caissons 51 de préférence équipés de buses telles que 52, alimentés en gaz de soufflage - chaque rouleau de maintien 32 est ainsi recouvert par un caisson 51. Tous les caissons 51 sont accrochés sur la face du disque qui constitue la came 33 et ils s'étendent parallèlement aux rouleaux 31 et 32 sensiblement sur toute leur longueur. Cet ensemble rouleau support 31, rouleaux de maintien 32, caissons 51, came 33 constitue un barillet 55 apte à tourner indépendamment des rouleaux 31 et 32, autour du même axe que le rouleau 31.

Avantageusement pour rigidifier le barillet 55, un flasque ou une seconde came, non représentés, est prévu à l'extrémité du barillet 55 où la came 33 n'est pas présente.

Ainsi dans le basculeur selon l'invention équipé de plusieurs postes de réception, équipé en outre de moyens de soufflage, la plaque de verre est soumise au refroidissement du gaz issu des buses 52 des caissons 51 disposés en regard de chacune de ses faces et dont le plan des orifices de sortie des buses est sensiblement parallèle auxdites faces, dès qu'elle pénètre dans le dispositif de basculement et pendant tout le temps où elle est présente dans ledit dispositif.

Il en résulte donc, grâce à cet équipement supplémentaire en moyens de soufflage, une possibilité supplémentaire de soufflage, soit en temps de soufflage plus long, soit une longueur équipée de soufflage plus importante. Cela autorise donc soit le raccourcissement de la portion 14 réservée au soufflage dans la partie fixe de l'installation, soit une vitesse de défilement plus importante des plaques de verre dans l'installation.

En outre, pour encore améliorer les performances de l'installation, des moyens de refroidissement 102 peuvent aussi être disposés le long du transporteur d'évacuation 100, la trempe proprement dite étant effectuée dans la zone 14 à profil courbe et éventuellement dans le basculeur 55, un refroidissement secondaire se poursuivant le long du transporteur 100.

Ces moyens 102 lorsqu'ils sont présents en position inférieure, le long du transporteur 100 peuvent également avoir un rôle d'amortissement de la plaque de verre lors de son accostage sur ledit transporteur 100.

Ces moyens 102 peuvent être disposés seulement en position inférieure par rapport au transporteur 100, donc ne soufflant que sur la face inférieure des plaque de verre, mais avantageusement ils sont également disposés en position supérieure pour souffler simultanément sur la face supérieure des plaque de verre.

En variante, pour éviter d'encombrer le basculeur avec des moyens de soufflage qui tournent en même temps que lui, en particulier lorsque le nombre de positions de réception est important, l'invention prévoit de ne pas embarquer de moyens de soufflage ou tous les moyens de soufflage sur le basculeur, mais de disposer à la place ou en outre des moyens de soufflage fixes, indépendants du basculeur mais disposés à proximité et soufflant sur les plaque de verre pendant qu'elles progressent dans ledit basculeur.

**Revendications**

1. Procédé de récupération des plaques de verre dans une installation de bombage et de trempe comprenant un lit de conformation à profil courbe dans la direction de progression des plaques de verre, dans lequel les plaques de verre, vers l'extrémité aval de cette installation sont engagées dans un système à basculement (30, 40), basculées par ce système jusqu'à une orientation différente de celle qu'elles avaient avant d'être prises en charge par ce système de basculement, ledit système à basculement, après avoir abandonné une plaque de verre étant amené dans une position de réception de la plaque de verre suivante, **caractérisé en ce que** cette amenée en position de réception s'effectue soit sans basculement, soit par rotation suivant un angle de rotation réduit, inférieur à l'angle dont doit tourner ledit système pour permettre la récupération d'une plaque de verre après basculement en pourvoyant à des multiples positions de réception des feuilles de verre dans le système de basculement.

2. Dispositif (30, 40) de récupération des plaques de verre par basculement dans une installation de bombage et de trempe comprenant un lit de conformation à profil courbe dans la direction de progression des plaques de verre, disposé du côte de l'extrémité aval de cette installation, en amont d'un transporteur (100) d'évacuation, **caractérisé en ce qu'**il possède un organe support (31) des plaques de verre dans le prolongement des organes (4) supportant les plaques de verre immédiatement en amont, faisant partie d'un barillet (35, 55) tournant autour du même axe que cet organe support (31), indépendamment de lui, ce barillet comprenant en outre une pluralité de moyens équivalents de maintien des plaques de verre par leur face supérieure, repartis autour de l'organe support (31) de façon équivalente, chacun étant destine à coopérer à son tour avec l'organe support (31) pour maintenir et supporter chaque plaque de verre au cours de son basculement, le dispositif possédant également des moyens destinés à entraîner le barillet (35, 55) en rotation.

3. Dispositif selon la revendication 2, **caractérisé en ce que** les moyens destinés à entraîner le barillet (35, 55) en rotation comprennent une came (33) solidaire du barillet (35, 55) et un galet moteur (34) entraînant périodiquement la came (33).

4. Dispositif selon la revendication 3, **caractérisé en ce que** la came (33) est globalement un disque dont la circonférence présente une succession de découpes en forme de créneaux constituant des parties actives (36) et des parties inactives (37), les parties actives (36) ayant un rayon R et les parties inactives (37) un rayon r, r étant inférieur à R.

5. Dispositif selon l'une des revendications 3 ou 4, **caractérisé en ce que** le galet (34) est équipé d'un moteur ou d'un embrayage à limiteur de couple.

6. Dispositif selon l'une des revendications 2 ou 3, **caractérisé en ce que** l'entraînement du barillet (35, 55) est obtenu par un moteur agissant directement sur ledit barillet ou indirectement par l'intermédiaire d'un galet (34) agissant sur une came (33) solidaire du barillet (35, 55), ce moteur étant commandé et interrompu périodiquement.

7. Dispositif selon l'une des revendications 2 à 6, **caractérisé en ce qu'**il comporte en outre des moyens de soufflage d'un gaz destiné à souffler sur les plaques de verre en vue de concourir à leur trempe, embarques sur le barillet (55).

8. Dispositif selon la revendication 7, **caractérisé en ce qu'**à chaque moyen de maintien (32) du barillet (55) est associé un moyen de soufflage, dispose plus à la périphérie du barillet (55) que les moyens de maintien (32) eux-mêmes, orientes de façon à souffler du gaz vers l'organe support (31) contre les plaques de verre engagées entre un moyen de maintien (32) et l'organe support central (31).

9. Dispositif selon la revendication 8, **caractérisé**

en ce que le barillet (55) possède deux moyens de maintien (32) équivalents disposés symétriquement par rapport à l'organe support central (31), un caisson de soufflage (51) étant associe à chaque moyen de maintien (32), les deux caissons (51) étant disposes symétriquement par rapport à l'organe support central (31).

10. Dispositif selon l'une des revendications 7 à 9, **caractérosé en ce que** des moyens de soufflage sont disposés le long du transporteur d'évacuation (100).

11. Dispositif selon l'une des revendications 2 à 10, **caractérisé en ce que** des moyens de soufflage fixes sont disposés à l'extrémité du basculeur mais à sa proximité, de façon à souffler du gaz concourrant à la trempe sur les plaques de verre pendant leur traversée du basculeur.

12. Dispositif selon l'une des revendications 2 à 10, **caractérisé en ce que** l'organe support (31) est l'un des organes suivants : rouleau rectiligne, tige cintrée équipée d'une gaine tubulaire annelée rotative, rouleau contrefléchi, rouleau en forme, les organes de maintien (32) ayant une forme complémentaire.

**Patentansprüche**

1. Verfahren zur Wiederaufnahme von Glasplatten in einer Biege- und Vorspannanlage mit einem in Bewegungsrichtung der Glasscheiben ein gekrümmtes Profil aufweisenden Formgebungsbett, wobei die Glasplatten zum stromabwärtigen Ende dieser Einrichtung von einem Schwenksystem (30, 40) übernommen und durch dieses System bis zum Erreichen einer Richtung, die sich von der der Scheiben vor Übernahme durch das Schwenksystem unterscheidet, verschwenkt werden, wobei das Schwenksystem nach dem begeben einer Glasplatte in eine Position zur Aufnahme der nächsten Glasplatte gebracht wird, **dadurch gekennzeichnet, daß** die Bewegung in die Aufnahmeposition entweder ohne Verschwenken oder durch Drehen um einen reduzierten Drehwinkel, der kleiner als der Winkel ist, um den das System gedreht werden muß, um die Rekuperation einer Glasscheibe nach dem Verschwenken zu ermöglichen, bewirkt wird, wobei eine Anzahl von Positionen zur Aufnahme von Glasscheiben in dem Schwenksystem vorgesehen wird.

2. Vorrichtung zur Wiederaufnahme von Glasplatten in einer Biege- und Vorspannanlage mit einem in Bewegungsrichtung der Glasscheiben ein gekrümmtes Profil aufweisenden Formgebungsbett mittels eines Schwenksystems, das am stromabwärtigen Ende dieser Anlage stromaufwärts von einem Abtransportförderer (100) angeordnet ist, **dadurch gekennzeichnet, daß** sie in Verlängerung der Einrichtungen (4), die die Glasscheiben unmittelbar vorher tragen, eine Stützeinrichtung (31) für die Glasscheiben aufweist, die Teil einer trommelförmigen Einheit (35, 55) ist, die sich unabhängig von dieser um die gleiche Achse wie die Stützeinrichtung (31) dreht, wobei die trommelförmige Einheit weiterhin eine Anzahl von äquivalenten Halteeinrichtungen für die Glasscheiben an der Oberseite aufweist, die in äquivalenter Weise um die Stützeinrichtung (31) herum verteilt sind und zusammen mit der Stützeinrichtung (31) zur Aufnahme und Halterung einer jeden Glasscheibe beim Verschwenken zu dienen, wobei die Vorrichtung ferner eine Einrichtung zum Drehantrieb der trommelförmigen Einheit (35, 55) aufweist.

3. Vorrichtung nach Anspruch 2, **dadurch gekennzeichnet, daß** die Einrichtungen für den Drehantrieb der trommelförmigen Einheit (35, 55) eine mit der trommelförmigen Einheit (35, 55) verbundene Nocke (33) und eine die Nocke (33) periodisch mitnehmende Antriebsrolle (34) aufweisen.

4. Vorrichtung nach Anspruch 3, **dadurch gekennzeichnet, daß** die Nocke (33) im wesentlichen durch eine Scheibe gebildet ist, die an ihrem Umfang eine Folge von zahnnutartigen Ausnehmungen aufweist, die aktive Bereiche (36) und inaktive Bereiche (37) bilden, wobei die aktiven Bereiche (36) einen Radius R und die inaktiven Bereiche (37) einen Radius r aufweisen, wobei r kleiner R ist.

5. Vorrichtung nach einem der Ansprüche 3 oder 4, **dadurch gekennzeichnet, daß** die Rolle (34) mit einem Antrieb oder einer Kupplung zur Drehmomentbegrenzung versehen ist.

6. Vorrichtung nach einem der Ansprüche 2 oder 3, **dadurch gekennzeichnet, daß** das Mitnehmen der trommelförmigen Einheit (35, 55) durch einen Antrieb bewirkt wird, der direkt auf die trommelförmige Einheit oder mittels einer Rolle (34) indirekt auf eine mit der trommelförmigen Einheit verbundene Nocke ( 33 ) einwirkt, wobei der Antrieb in Perioden gesteuert und unterbrochen wird.

7. Vorrichtung nach einem der Ansprüche 2 bis 6, **dadurch gekennzeichnet, daß** sie weiterhin an der trommelförmigen Einheit angeordnete Gasblaseinrichtungen zum Beblasen der Glasscheiben aufweist, um zum Vorspannen beizutragen.

8. Vorrichtung nach Anspruch 7, **dadurch gekennzeichnet, daß** jede Halteeinrichtung (32) der trommelförmigen Einheit (55) mit einer Blaseinrichtung verbunden ist, die näher als die Halteeinrichtungen (32) selbst am Umfang der trommelförmigen Einheit angeordnet und so ausgerichtet ist, daß Gas zu der Stützeinrichtung (31) hin auf die Glasscheiben, die sich zwischen einer Halteeinrichtung (32) und der zentralen Stützeinrichtung (31) befinden, geblasen wird.

9. Vorrichtung nach Anspruch 8, **dadurch gekennzeichnet, daß** die trommelförmige Einheit (55) zwei äquivalente, symmetrisch zur zentralen Stützeinrichtung angeordnete Halteeinrichtungen (32) aufweist, wobei ein Blaskasten (51) mit jeder Halteeinrichtung (32) verbunden ist, wobei die beiden Kästen (51) symmetrisch zur zentralen Stützeinrichtung (§!) angeordnet sind.

10. Vorrichtung nach einem der Ansprüche 7 bis 9, **dadurch gekennzeichnet, daß** die Blaseinrichtungen entlang des Abtransportförderers (100) angeordnet sind.

11. Vorrichtung nach einem der Ansprüche 2 bis 10, **dadurch gekennzeichnet, daß** die stationären Blaseinrichtungen am Ende der Schwenkeinrichtung, aber in ihrer Nachbarschaft, derart angeordnet sind, daß während des Durchlaufens durch die Schwenkeinrichtung zum Vorspannen beitragendes Gas auf die Glasscheiben geblasen wird.

12. Vorrichtung nach einem der Ansprüche 2 bis 10, **dadurch gekennzeichnet, daß** die Stützeinrichtung (31) eines der folgenden Elemente ist: geradlinige Rolle, mit einer rohrförmigen Umhüllung versehene, rotationsmäßig gekrümmte, gebogene Stangen, überhöhte Rollen, Formrollen, wobei die Halteeinrichtungen (32) eine komlementäre Form haben.

## Claims

1. Method of recovering glass plates from a curving and toughening installation comprising a shaping bed having a profile curved in the direction of travel of the glass plates, in which the glass plates, towards the downstream end of this installation, are engaged into a tilting system (30, 40), are tilted by this system into a different orientation from that which they had before being taken over by this tilting system, said tilting system, after having abandoned a glass plate, being brought into a position for receiving the next glass plate, **characterised in that** this bringing into a reception position is performed either without tilting or by rotation through a reduced angle of rotation, less than the angle through which said system must rotate to allow the recovery of a glass plate after tilting, by providing for multiple reception positions for the glass sheets in the tilting system.

2. Device (30, 40) for recovering glass plates by tilting, in a curving and toughening installation comprising a shaping bed having a profile curved in the direction of travel of the glass plates, the device being disposed at the downstream end of this installation and upstream of a discharge conveyor (100), **characterised in that** the device possesses a support element (31) for the glass plates in the continuation of the elements (4) supporting the glass plates immediately upstream, and forming part of a barrel (35, 55) rotating about the same axis as that support element (31) and independently of it, this barrel comprising, in addition, a plurality of equivalent means for holding the glass plates by their upper face, distributed about the support element (31) in equivalent manner, each being intended for cooperating in its turn with the support element (31) for holding and supporting each glass plate during its tilting, the device also possessing means intended for driving the barrel (35, 55) in rotation.

3. Device according to Claim 2, **characterised in that** the means intended for driving the barrel (35, 55) in rotation comprise a cam (33) integral with the barrel (35, 55) and a driving roller (34) periodically driving the cam (33).

4. Device according to Claim 3, **characterised in that** the cam (33) is, overall, a disc, the circumference of which has a succession of recesses in the shape of castellations, constituting active parts (36) and inactive parts (37), the active parts (36) having a radius R and the inactive parts (37) a radius r, r being less than R.

5. Device according to one of Claims 3 or 4, **characterised in that** the roller (34) is provided with a motor or with a torque-limiter coupling.

6. Device according to one of Claims 2 or 3, **characterised in that** the driving of the barrel (35, 55) is achieved by a motor acting directly on said barrel or indirectly via a roller (34) acting on a cam (33) integral with the barrel (35, 55), this motor being started and stopped periodically.

7. Device according to one of Claims 2 to 6, **characterised in that** it comprises, in addition, means for blowing a gas intended for blowing onto the glass plates for the purpose of participating in their toughening, these means being mounted on the barrel (55).

8. Device according to Claim 7, **characterised in that**, with each holding means (32) of the barrel (55), there is associated a blowing means, disposed more at the periphery of the barrel (55) than the holding means (32) themselves, and orientated for blowing gas towards the support element (31) onto the glass plates engaged between a holding means (32) and the central support element (31).

9. Device according to Claim 8, **characterised in that** the barrel (55) possesses two equivalent holding means (32), disposed symmetrically with respect to the central support element (31), a blowing chest (51) being associated with each holding means (32), the two chests (51) being disposed symmetrically with respect to the central support element (31).

10. Device according to one of Claims 7 to 9, **characterised in that** blowing means are disposed along the discharge conveyor (100).

11. Device according to one of Claims 2 to 10, **characterised in that** fixed blowing means are disposed at the end of the tilting device but in proximity to it, so as to blow a gas participating in the toughening onto the glass plates during their passage through the tilting device.

12. Device according to one of Claims 2 to 10, **characterised in that** the support element (31) is one of the following elements: a rectilinear roller, a curved rod provided with a rotary, ringed tubular sleeve, a contraflexure roller, a shaped roller, the holding means (32) having a complementary shape.

FIG.1

FIG. 2A

FIG. 2B

FIG. 2C

FIG. 2D

FIG.3A

FIG.3B

FIG.3C

FIG_4